(19) **Europäisches Patentamt / European Patent Office / Office européen des brevets**

(11) **EP 2 801 797 A1**

(12) # EUROPEAN PATENT APPLICATION
published in accordance with Art. 153(4) EPC

(43) Date of publication:
**12.11.2014 Bulletin 2014/46**

(21) Application number: **12864504.1**

(22) Date of filing: **16.01.2012**

(51) Int Cl.:
*G01F 1/88* (2006.01)   *G01P 5/22* (2006.01)

(86) International application number:
**PCT/CN2012/070436**

(87) International publication number:
**WO 2013/102312 (11.07.2013 Gazette 2013/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2012 CN 201210006144**

(71) Applicant: **Lanzhou Haimo Technologies Co., Ltd. Gansu 730010 (CN)**

(72) Inventors:
• **CHEN, Jige**
  **Lanzhou**
  **Gansu 730010 (CN)**

• **PAN, Yanzhi**
  **Lanzhou**
  **Gansu 730010 (CN)**
• **WU, Guodong**
  **Lanzhou**
  **Gansu 730010 (CN)**
• **WU, Zhiyong**
  **Lanzhou**
  **Gansu 730010 (CN)**

(74) Representative: **Glas, Holger**
  **Maiwald Patentanwalts GmbH**
  **Elisenhof**
  **Elisenstrasse 3**
  **80335 München (DE)**

(54) **STEAM FLOW METERING DEVICE AND METERING METHOD THEREFOR**

(57)     Provided are a steam flow metering device and a metering method therefor. The device mainly comprises a mono-energetic gamma sensor (5), a Venturi-type flowmeter (6), a temperature transmitter (2), a pressure transmitter (3), a pipe connection section at the steam-inlet (1), and a pipe connection section at the steam-outlet (7), the function thereof being to measure the quantity of saturated water and saturated steam within the steam effectively and in real time. The measuring method thereof is: measuring the dryness of the saturated steam at the cross section by the mono-energetic gamma sensor (5); measuring the mass flow of the total steam by the Venturi-type flowmeter (6), and at the same time considering the potential slip (the phase velocity difference) existing in the saturated steam and the saturated water, such that the quantity of saturated steam, the quantity of saturated water and the corresponding thermal values thereof can be calculated in real time by a computer system by utilizing the method of analytical solution to the vapour/liquid annular flow slip. The vapour and the liquid phases in the steam can be directly distinguished and measured by the present measuring method. The present method is different from the conventional method of single-phase metering encryption correction, has no additional error, there is no influence from the type of flow and the phase change between the vapour and liquid, and has a higher measuring precision.

Figure 1

EP 2 801 797 A1

## Description

### Field of the invention

The invention relates to the inline metering field of steam flow rate and steam thermal value, particularly, to a steam flow rate metering device which can meter real time steam injected to drive heavy oil during the oil field production process. The present invention further relates to a method for metering steam flow rate by using such metering device.

### Description of the prior art

Steam is an important secondary energy source in the petrochemical plant. In view of enterprise benefit, the consumption of steam should be reduced in order to reduce production costs. In view of saving energy and reducing consumption, a basic problem which should be solved is the energy metering, and during the heavy oil production process driven by steam in oil field, only when injected steam is accurately metered, the quantitative objective of saving energy can be determined. Recently, domestic heavy oil resources are continuously explored and developed, and more than 90% of the heavy oil resources are explored by steam soaking or steam driving. However, since injected steam has a specialty of high temperature, high pressure and vapor-liquid entrainment, there are many difficulties in accurately metering its flow rate, and thus the accurate metering of injected steam is a problem in the field of flow rate metering for a long time. Now, vortex flow meters, pressure differential meters (representative orifice flow meters) or elbow flow meters are commonly used in the industry for metering steam. The steam metering is commonly based on the mass flow rate. The mass flow rate is relevant to the steam density, and the steam density further is influenced by steam pressure and steam temperature. During the steam metering, with continuous variations of temperature and pressure of the hot steam, its density varies, so that the mass flow rate also varies. If the metering meter cannot track such variation, a larger metering error will be necessarily produced. Hence, during the steam metering, the density compensation is generally achieved by pressure and temperature compensations. However, since steam is a relatively special medium, with the variations of working condition, such as temperature, pressure, etc., overheat steam, which is a single-phase in nature, will often be converted into saturated steam and saturated water, to form a vapor-liquid two phase medium. Thus, it is difficult to conventional single-phase meters to reflect in real time such variations, let alone to accurately meter the "saturated steam" and "saturated water" in real time, respectively.

### Summary of the invention

The technical problem to be solved by the present invention is to overcome the defect that conventional meters cannot track in real time the state of the phase change during the steam metering, and to provide a technical means in which a single energy gamma ray sensor is used to measure the steam dryness and a Venturi meter is used to measure the mass flow of the total steam, so that the online measurement to respective mass flow rate of the vapor and liquid phases in steam can be achieved, thereby to obtain a steam flow rate metering device to metering thermal value of the total flow. The present invention further provides a method for metering steam flow rate by utilizing such metering device.

The technical problem of the invention can be solved by the following technical solutions:

A first embodiment of the steam metering device of the present invention comprises a pipeline, in which an inlet connection flange is mounted to the inlet of the pipeline, and following said inlet connection flange, a temperature transmitter and a pressure transmitter are mounted to the pipeline successively. The pipeline is a horizontal pipeline, and after the pressure transmitter, a Venturi meter is mounted to the said horizontal pipeline. A single energy gamma ray sensor is arranged at the upstream of the inlet of the Venturi meter or at throat portion of the Venturi meter. A differential pressure transmitter is mounted to the Venturi meter so as to measure in real time the differential pressure value produced when a fluid flows through the Venturi meter. An outlet of said pipeline follows the Venturi meter.

A second embodiment of the steam metering device of the present invention comprises a pipeline, in which an inlet connection flange is mounted to the inlet of the pipeline. The pipeline is a vertical pipeline, and following the inlet connection flange, an inlet blind three-way means is mounted to the said vertical pipeline. A temperature transmitter and a pressure transmitter are mounted to the said inlet blind three-way means successively. Following the pressure transmitter, a Venturi meter is mounted to said pipeline. A single energy gamma ray sensor is arranged at the upstream of the inlet of the Venturi meter or at the throat portion of the Venturi meter. A differential pressure transmitter is mounted to the Venturi meter so as to measure in real time the differential pressure value produced when a fluid flows through the Venturi meter. An outlet of said pipeline follows the Venturi meter.

A third embodiment of the steam metering device of the present invention comprises one pipeline, in which an inlet connection flange is mounted to the inlet of the pipeline. Said pipeline is an inverted U-shape pipeline, and following the inlet connection flange, an inlet blind three-way means is mounted to said inverted U-shape pipeline. A temperature transmitter and a pressure transmitter are mounted to the inlet blind three-way means successively. After the pressure transmitter, a Venturi meter is mounted to said pipeline. A single energy gamma ray sensor is arranged at the upstream of the inlet of the Venturi meter or at the throat portion of the Venturi meter. A differential pressure transmitter is mounted to the Venturi meter so as to measure in real time the differential pressure value produced when a fluid flows through the Venturi meter. An outlet of said pipeline follows the Venturi meter.

The single energy gamma ray sensor is used to measure the steam phase volume fraction at cross section and the steam dryness at the cross section.

A method for metering steam by utilizing anyone of the above three steam metering devices comprises the following steps:

1) measuring the phase volume fraction $\alpha$ of saturated steam by utilizing the single energy gamma ray sensor;
2) measuring in real time the pressure and the temperature in the pipeline by utilizing the pressure transmitter and the temperature transmitter;
3) calculating the density of saturated water and saturated steam, to obtain the mixed density $\rho_{mix}$ of the fluid and the steam dryness X ;
4) measuring the differential pressure $\Delta P$ of the total fluid by utilizing the Venturi meter, and then using the measured data to calculate the total mass flow rate Q, the flow rate $Q_1$ of saturated steam and the flow rate $Q_2$ of saturated water;
5) compensating the difference $\Delta Q_{steam}$ between the measured flow rate $Q_1$ of saturated steam and the real flow rate $Q_1$' of saturated steam and the difference of $\Delta Q_{saturated\ water}$ between the measured flow rate $Q_2$ of saturated water and the real flow rate $Q_2$' of saturated water by utilizing an analytical solution to the vapor-liquid slip in annular flow regime.

The steam dryness is calculated by utilizing the following gamma ray absorption equation:

$$\frac{1}{D} Ln \frac{N_0}{N_x} = \alpha * \mu_{steam} + (1 - \alpha) * \mu_{saturatedwater}$$

$$\mu_{steam} = \mu_m * \rho_{steam}$$

$$\mu_{saturated\ water} = \mu_m * \rho_{saturated\ water}$$

in which,

$\mu_m$ represents the mass absorption coefficient of water, irrelevant to its state;
$N_x$, $N_0$ represent gamma ray counting on the online measurement and on the blank pipeline, respectively;
D represents the gamma ray transmission distance;
$\mu_{steam}$, $\mu_{saturatedwater}$ represent the online linear absorption coefficients of "saturated steam" and "saturated water", respectively;

$\rho_{steam}$, $\rho_{saturated\ water}$ represent the online densities of "saturated steam" and "saturated water", respectively.

The steam dryness is calculated by the following equation:

$$X = \frac{\alpha}{\alpha + (1 - \alpha) * \rho_{saturated \atop water} / \rho_{steam}}$$

The mass flow rates of saturated steam and saturated water can be calculated according to the total mass flow rate and the dryness.

The total mass flow rate is calculated by the following equation:

$$Q = K \sqrt{\Delta P * \rho_{mix}}$$

$$\rho_{mix} = \alpha * \rho_{steam} + (1 - \alpha) * \rho_{saturated \atop water}$$

in which $K$ is relevant to the size of the Venturi meter and the efflux coefficient.

The mass flow rate of saturated steam is calculated by the following equation:

$$Q_1 = Q * X$$

The mass flow rate of saturated water is calculated by the equation:

$$Q_2 = Q * (1 - X)$$

The present invention uses a measuring device comprising a combination of a single energy gamma ray sensor and a Venturi meter, in which the single energy gamma ray sensor can be used to precisely distinguish the ratio of saturated steam to saturated water (i.e., the phase volume fraction), and is used to calculate the total mass flow by combining the differential pressure measurement of the Venturi meter; and at the same time, the method of analytical solution to the vapor-liquid slip in annular flow regime is used to treat the potential phase velocity different between the saturated steam and the saturated water. Thus, the mass flow rate of "saturated steam", the mass flow rate of "saturated water" and the corresponding thermal values thereof can be calculated precisely and in real time. Hence, the device is a novel spot online steam flow rate metering device in the oil field industry.

**Brief description of the drawings**

Figure 1 is a schematic diagram of the first embodiment of the steam flow rate metering device of the invention.

Figure 2 is a schematic diagram of the second embodiment of the steam flow rate metering device of the invention.

Figure 3 is a schematic diagram of the third embodiment of the steam flow rate metering device of the invention.

In the Figures, a reference number 1 represents inlet connection flange, 2 represents the temperature transmitter, 3 represents the pressure transmitter, 4 represents the single energy gamma ray sensor, 5 represents the differential pressure transmitter, 6 represents the Venturi meter, 7 represents the outlet of the steam flow rate metering device, 8 represents the inlet blind three-way means, 9 represents a skid pipeline, 10 represents the horizontal pipeline, and 11 represents the vertical pipeline.

**Detailed description of the preferred embodiment**

Hereinafter, the present invention is described in details with reference to the drawings and examples.

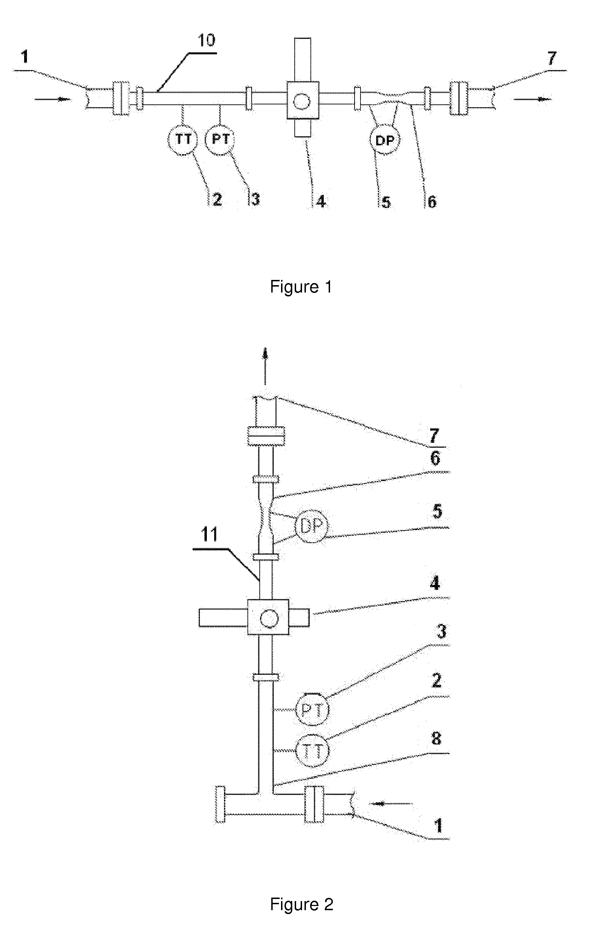

As shown in Figure 1, the first embodiment of the steam flow rate metering device of the invention is in a horizontally-arranged structure. The device comprises a pipeline. An inlet connection flange 1 is mounted to the inlet of the pipeline, and following the inlet connection flange 1, a temperature transmitter 2 and a pressure transmitter 3 are mounted to the pipeline successively. The device is characterized in that said pipeline is a horizontal pipeline 10, and following the pressure transmitter 3, a Venturi meter 6 is mounted to the horizontal pipeline 10; a single energy gamma ray sensor 4 is arranged at the upstream of the inlet of the Venturi meter 6 or at the throat portion of the Venturi meter 6; a differential pressure transmitter 5 is mounted to the Venturi meter so as to measure in real time the differential pressure value produced when a fluid flows through the Venturi meter; an outlet of said pipeline 7 follows the Venturi meter 6.

The working process is as follow: steam fluid enters the steam meter through the inlet connection flange 1; then it passes through the temperature transmitter 2, the pressure transmitter 3, the single energy gamma ray sensor 4 and the Venturi meter 6 successively; and at last, the fluid enters the downstream pipeline through the outlet 7 of the steam flow rate metering device. Therein, the temperature transmitter and the pressure transmitter are used to measure the online temperature and pressure which can be used in the conversion between the flow rate in working condition and the flow rate in standard condition and in the conversions of density, thermal value and other parameters; the single energy gamma ray sensor may be used to measure the steam dryness at cross section; and the Venturi meter and the differential pressure meter are used to measure in real time the total mass flow rate of steam.

As shown in Figure 2, the second embodiment of the steam flow rate metering device of the invention is in a vertically-arranged structure. The device comprises a vertical pipeline 11. An inlet connection flange 1 is mounted to the inlet of the pipeline, and following the inlet connection flange 1, an inlet blind three-way means 8 is mounted to the vertical pipeline. A temperature transmitter 2 and a pressure transmitter 3 are mounted to said inlet blind three-way means 8 successively. Following the pressure transmitter 3, a Venturi meter 6 is mounted to said pipeline. A single energy gamma ray sensor 4 is arranged at the upstream of the inlet of the Venturi meter 6 or at the throat portion of the Venturi meter 6. A differential pressure transmitter 5 is mounted to the Venturi meter 6 so as to measure in real time the differential pressure value produced when a fluid flows through the Venturi meter. An outlet of said pipeline 7 follows the Venturi meter 6.

The working process is as follow: steam fluid enters the steam meter through the inlet connection flange 1; the fluid firstly passes through the inlet blind three-way means 8 to mix the fluid, and at the same time, the horizontal flowing state is changed into a vertical flowing state; subsequently, the fluid passes through the temperature transmitter 2, the pressure transmitter 3, the single energy gamma ray sensor 4 and the Venturi meter 6 successively; and at last, it enters the downstream pipeline through the outlet 7 of the steam flow rate metering device. Therein, the temperature transmitter and the pressure transmitter are used to measure the online temperature and pressure which can be used in the conversion between the flow rate in working condition and the flow rate in standard condition and in the conversions of density, thermal value and other parameters; the single energy gamma ray sensor may be used to measure the steam dryness at cross section, and the Venturi meter and the differential pressure meter are used to measure the total mass flow of steam in real time.

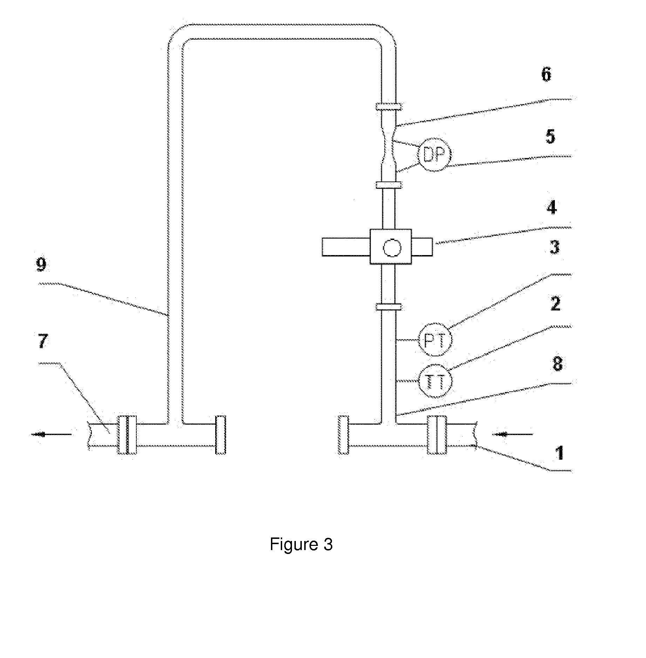

Figure 3 shows the third embodiment of the steam flow rate metering device of the invention, which is in an inverted U-shape skid pipeline. The device comprises an inverted U-shape pipeline 9. An inlet connection flange 1 is mounted to the inlet of the inverted U-shape pipeline, and following the inlet connection flange 1, an inlet blind three-way means 8 is mounted to the said pipeline. A temperature transmitter 2 and a pressure transmitter 3 are mounted to the inlet blind three-way means 8 successively. Following the pressure transmitter 3, a Venturi meter 6 is mounted to the pipeline. A single energy gamma ray sensor 4 is arranged at the upstream of the inlet of the Venturi meter 6 or at the throat portion of the Venturi meter 6. A differential pressure transmitter is mounted to the Venturi meter so as to measure in real time the differential pressure value produced when a fluid flows through the Venturi meter. An outlet of said pipeline 7 follows the Venturi meter 6.

The working process is as follow: steam fluid enters the steam meter through the inlet connection flange 1; the fluid firstly passes through the inlet blind three-way means 8 to mix the fluid, and at the same time, the horizontal flowing state is changed into a vertical flowing state; subsequently, the fluid passes through the temperature transmitter 2, the pressure transmitter 3, the single energy gamma ray sensor 4 and the Venturi meter 6 successively; in order to make the measuring device in the form of skid, an inverted U-shape pipeline 9 is mounted; and at last, steam enters the downstream pipeline through the outlet of the steam flow rate metering device 7. Therein, the temperature transmitter and the pressure transmitter are used to measure the online temperature and pressure which can be used in the conversion between the flow rate in working condition and the flow rate in standard condition and the conversions of density, thermal value and other parameters; the single energy gamma ray sensor may be used to measure the steam dryness at cross section, and the Venturi meter and the differential pressure meter are used to measure the total mass flow of steam in real time.

The method of the invention for steam metering comprises the following steps:

1) according to the theory that the gamma rays attenuation coefficients of the vapor and liquid phases in steam are different from one another, measuring the phase volume fraction $\alpha$ of saturated steam by utilizing the single energy gamma ray sensor;

2) measuring the pressure and temperature in the pipeline in real time by utilizing the pressure transmitter 3 and the temperature transmitter 2 mounted on the pipeline;

3) obtaining the mixed density $\rho_{mix}$ and steam dryness X of the fluid by calculating the densities of saturated water and saturated steam;

4) measuring the differential pressure $\Delta P$ of the total fluid by utilizing the Venturi meter, and at the same time by considering the vapor-liquid slip, calculating the measured data so as to obtain the total mass flow rate $Q$, the flow rate $Q_1$ of saturated steam and the flow rate $Q_2$ of saturated water.

Therein, the calculation method and the calculation process are as follows:

(1) During the steam metering, the mass absorption coefficient $\mu_m$ of water can be obtained by the calibration of the in-situ liquid medium of water with the single energy gamma ray sensor, and according to the definition for the mass absorption coefficient and the physical attributes thereof, no matter what physical state water is in (in gas state, in liquid state or in solid state, or no matter the phase change takes place), if its composition is not changed, the absorption coefficient must be a constant value.

The interaction between gamma ray and a substance may be expressed by the following physical equation:

$$\frac{1}{D} Ln \frac{N_0}{N_x} = \sum_{i=1}^{n} \alpha_i \mu_i$$

in which,

$N_x$, $N_o$ represent gamma ray counting on the online measurement and on the blank pine, respectively;

D represents the transmission distance of the gamma ray;

$\alpha_i$ represents the phase volume fraction at cross section of the fluid in phase i;

$\mu_i$ represents the linear attenuation coefficient of the fluid in phase i.

In the steam metering, assumed that the phase volume fraction at cross section of "saturated water" and "saturated steam" is expressed as $\alpha$, the gamma ray absorption can be calculated by the following equation:

$$\frac{1}{D} Ln \frac{N_0}{N_x} = \alpha * \mu_{steam} + (1-\alpha) * \mu_{saturatedwater}$$

$$\mu_{steam} = \mu_m * \rho_{steam}$$

$$\mu_{saturated\ water} = \mu_m * \rho_{saturated\ water}$$

in which

$\mu_{steam}$, $\mu_{saturated\ water}$ represent the online linear absorption coefficients of saturated steam and saturated water, respectively;

$\rho_{steam}$, $\rho_{saturated}$ respectively represent the online densities of saturated steam and saturated water.

Thus, the steam dryness can be calculated by the following equation:

$$X = \frac{\alpha}{\alpha + (1-\alpha)*\rho_{saturated\ water} / \rho_{steam}}.$$

(2) According to the total mass flow rate and dryness, the mass flow rates of saturated steam and saturated water can be respectively calculated.

The total mass flow rate is calculated by the equation:

$$Q = K\sqrt{\Delta P * \rho_{mix}}$$

$$\rho_{mix} = \alpha * \rho_{steam} + (1-\alpha) * \rho_{saturated\ water}.$$

The mass flow rate of saturated steam is calculated by the equation:

$$Q_1 = Q * X$$

The mass flow rate of saturated water is calculated by the equation:

$$Q_2 = Q * (1-X)$$

3) During the steaming metering, the potential phase velocity difference between the vapor phase and liquid phase may result in a difference $\Delta Q_{steam}$ between the directly-measured flow rate $Q_1$ of saturated steam and the real flow rate $Q_1'$ of saturated steam, and a difference $\Delta Q_{saturated\ water}$ between the directly-measured flow rate $Q_2$ of saturated water and the real flow rate $Q_2'$ of saturated water, and thus a method of analytical solution to the vapor-liquid slip in annular flow regime is used to compensate the differences.

$$\Delta Q_{steam} = \frac{K_1}{\mu_{saturated\ water}}[(2-\frac{1}{\mu_R})\alpha^4 - 2\alpha^2 + \frac{\alpha(\alpha\rho_R + (1-\alpha))}{\alpha\rho_R\mu_R + (1-\alpha)}](K_2 f\rho_{steam}Q^2_t)$$

$$\Delta Q_{\substack{saturated \\ water}} = \frac{K_1}{\mu_{\substack{saturated \\ water}}} [-1 - \alpha^4 + 2\alpha^2 + \frac{(1-\alpha) \ (\alpha\rho_R + (1-\alpha) \ )}{\alpha\rho_R\mu_R + (1-\alpha)}](K_2 f \rho_{\substack{saturated \\ water}} Q_t^2)$$

in which:

$K_1$, $K_2$ are constants, depending on the geometric size of the steam flow rate meter;

$\mu_{\substack{saturated \\ water}}$ represents the viscosity of saturated water;

$\mu_R$ represents the online viscosity ratio of saturated steam to saturated water;

$\rho_R$ represents the online density ratio of saturated steam and saturated water;

$f$ represents the frictional resistance coefficient, which is a function of the Reynolds number of fluid and the relative roughness of pipe wall;

$Q_t$ represents the total flow rate metered by the Venturi meter in the steam flow rate metering device.

4) Finally, the mass flow rates of statured water and saturated steam and thermal values thereof are calculated as follows:

The mass flow rate of saturated steam is calculated by the following equation:

$$Q'_1 = Q_1 + \Delta Q_{steam}$$

The mass flow rate of saturated water is calculated by the following equation:

$$Q'_2 = Q_2 + \Delta Q_{\substack{saturated \\ water}}$$

The thermal value rate (enthalpy) of saturated steam is calculated by the following equation: $H_1 = Q'_1 h_1$
The thermal value rate (enthalpy) of saturated water is calculated by the following equation: $H_2 = Q'_2 h_2$
The total mass thermal value rate (enthalpy) is calculated by the following *equation: $H = H_1 + H_2$*
in which, $h_1$, $h_2$ are respectively enthalpy values of saturated steam and saturated water under a specific pressure and at a specific temperature.

## Claims

1. A steam flow rate metering device comprising a pipeline, in which an inlet connection flange 1 is mounted to the inlet of the pipeline, and following said inlet connection flange 1, a temperature transmitter 2 and a pressure transmitter 3 are mounted to the pipeline successively, **characterized in that** said pipeline is a horizontal pipeline 10, and after the pressure transmitter 3, a Venturi meter 6 is mounted to the horizontal pipeline 10; a single energy gamma ray sensor 4 is arranged at the upstream of the inlet of the Venturi meter 6 or at the throat portion of the Venturi meter 6; a differential pressure transmitter 5 is mounted to the Venturi meter so as to measure in real time the differential pressure value produced when a fluid passes through the Venturi meter; an outlet of said pipeline 7 follows the Venturi meter 6.

2. A steam flow rate metering device comprising a pipeline, in which an inlet connection flange 1 is mounted to the inlet of the pipeline, **characterized in that** said pipeline is a vertical pipeline 11, and following the inlet connection flange 1, an inlet blind three-way means 8 is mounted to said vertical pipeline 11; a temperature transmitter 2 and a pressure transmitter 3 are mounted to said inlet blind three-way means 8 successively; after the pressure transmitter 3, a Venturi meter 6 is mounted to said pipeline; a single energy gamma ray sensor 4 is arranged at the upstream of the inlet of the Venturi meter 6 or at the throat portion of the Venturi meter 6; a differential pressure transmitter 5 is mounted to the Venturi meter 6 so as to measure in real time the differential pressure value produced when a fluid flows through the Venturi meter; an outlet of said pipeline 7 follows the Venturi meter 6.

3. A steam flow rate metering device comprising a pipeline, in which an inlet connection flange 1 is mounted to the inlet of the pipeline, **characterized in that** said pipeline is an inverted U-shape pipeline 9, and following the inlet connection flange 1, an inlet blind three-way means 8 is mounted to the inverted U-shape pipeline 9, and a temperature transmitter 2 and a pressure transmitter 3 are mounted to said inlet blind three-way means 8 successively; after the pressure transmitter 3, a Venturi meter 6 is mounted to said pipeline; a single energy gamma ray sensor 4 is arranged at the upstream of the inlet of the Venturi meter 6 or at the throat portion of the Venturi meter 6; a differential pressure transmitter is mounted to the Venturi meter 6 so as to measure in real time the differential pressure value produced when a fluid flows through the Venturi meter; an outlet of said pipeline 7 follows the Venturi meter 6.

4. The steam flow rate metering device according to any one of claims 1 to 3, **characterized in that** said single energy gamma ray sensor 4 is used to measure the phase volume fraction of the steam and the steam dryness at cross section.

5. A method for metering steam flow rate by using the steam flow rate metering device according to any one of claims 1 to 3, comprising the following steps:

1) measuring the phase volume fraction $\alpha$ of saturated steam by utilizing the single energy gamma ray sensor;
2) measuring in real time the pressure and the temperature in the pipeline by utilizing the pressure transmitter and the temperature transmitter;
3) calculating the density of saturated water and saturated steam, to obtain the mixed density $\rho_{mix}$ of the fluid and the steam dryness X ;
4) measuring the differential pressure $\Delta P$ of the total fluid by utilizing the Venturi meter, and then using the measured data to calculate the total mass flow rate $Q$, the flow rate $Q_1$ of saturated steam and the flow rate $Q_2$ of saturated water;
5) compensating the difference $\Delta Q_{steam}$ between the measured flow rate $Q_1$ of saturated steam and the real flow rate $Q_1$' of saturated steam and the difference of $\Delta Q_{saturated\ water}$ between the measured flow rate $Q_2$ of saturated water and the real flow rate $Q_2$' of saturated water by utilizing an analytical solution to the vapor-liquid slip in annular flow regime.

6. The method for metering steam flow rate according to claim 5 by using the steam flow rate metering device according to any one of claims 1 to 3, **characterized in that** the steam dryness is calculated by utilizing the following gamma ray absorption equation:

$$\frac{1}{D} Ln \frac{N_0}{N_x} = \alpha * \mu_{steam} + (1-\alpha) * \mu_{saturated\ water}$$

$$\mu_{steam} = \mu_m * \rho_{steam}$$

$$\mu_{saturated\ water} = \mu_m * \rho_{saturated\ water}$$

in which

$\mu_{steam}$, $\mu_{saturated\ water}$ represent the online linear absorption coefficients of "saturated steam" and "saturated water", respectively, and

$\rho_{steam}$, $\rho_{saturated}$ represent the online densities of "saturated steam" and "saturated water", respectively; and the steam dryness is calculated by the following equation:

$$X = \frac{\alpha}{\alpha + (1-\alpha) * \rho_{saturated\ water} / \rho_{steam}}.$$

7. The method for metering steam flow rate according to claim 6 by using the steam flow rate metering device according to any one of claims 1 to 3, **characterized in that** the mass flow rate of saturated steam and the mass flow rate of saturated water can be calculated according to the total mass flow and the dryness, in which the total mass flow rate is calculated by the following equation:

$$Q = K\sqrt{\Delta P * \rho_{mix}}$$

$$\rho_{mix} = \alpha * \rho_{steam} + (1-\alpha) * \rho_{saturated\ water};$$

the mass flow rate of saturated steam is calculated by the following equation:

$$Q_1 = Q * X;$$

and
the mass flow rate of saturated water is calculated by the equation:

$$Q_2 = Q * (1-X)$$

8. The method for metering steam flow rate according to claim 5 by using the steam flow rate metering device according to any one of claims 1 to 3, **characterized in that** the final flow rate of saturated steam and the final flow rate of saturated water are obtained after a compensation of analytic solution to the vapor-liquid slip in annular flow regime; during the steam metering, the potential phase velocity difference between the vapor phase and liquid phase may result in a difference $\Delta Q_{steam}$ between the directly-measured flow rate $Q_1$ of saturated steam and the real flow rate $Q_1'$ of saturated steam, and a difference $\Delta Q_{saturated\ water}$ between the directly-measured flow rate $Q_2$ of saturated water water and the real flow rate $Q_2'$ of saturated water, and thus a method of analytical solution to the vapor-liquid slip in annular flow regime is used to compensate above differences:

$$\Delta Q_{steam} = \frac{K_1}{\mu_{saturated\ water}}[(2 - \frac{1}{\mu_R})\alpha^4 - 2\alpha^2 + \frac{\alpha\ (\alpha\rho_R + (1-\alpha)\ )}{\alpha\rho_R\mu_R + (1-\alpha)}](K_2 f\rho_{steam}Q^2_t)$$

$$\Delta Q_{saturated\ water} = \frac{K_1}{\mu_{saturated\ water}}[-1-\alpha^4 + 2\alpha^2 + \frac{(1-\alpha)\ (\alpha\rho_R + (1-\alpha)\ )}{\alpha\rho_R\mu_R + (1-\alpha)}](K_2 f\rho_{saturated\ water}Q^2_t)$$

in which:

K$_1$, *K*$_2$ are constants, depending on the geometric size of the steam flow meter;

$\mu_{\substack{saturated \\ water}}$ represents the viscosity of saturated water;

$\mu_R$ represents the online viscosity ratio of saturated steam to saturated water;

$\rho_R$ represents the online density ratio of saturated steam and saturated water;

*f* represents the frictional resistance coefficient, which is a function of the Reynolds number of fluid and the relative roughness of pipe wall;

*Q*$_t$ represents the total flow rate metered by the Venturi meter in the steam flow rate metering device;

and finally,

the mass flow rate of saturated steam is calculated by the following equation:

$$Q'_1 = Q_1 + \Delta Q_{steam};$$

and

the mass flow rate of saturated water is calculated by the following equation:

$$Q'_2 = Q_2 + \Delta Q_{\substack{saturated \\ water}}.$$

Figure 1

Figure 2

Figure 3

## INTERNATIONAL SEARCH REPORT

| | International application No. |
|---|---|
| | **PCT/CN2012/070436** |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: G01

Documentation searched other than minimum documentation to the extent that such documents are included in the fields searched

Electronic data base consulted during the international search (name of data base and, where practicable, search terms used)

CNABS, CNTXT, CJFD, VEN: VENTURI SLIP GAMMA TRI PHASE TWO WATER GAS PRESSUR

### C. DOCUMENTS CONSIDERED TO BE RELEVANT

| Category* | Citation of document, with indication, where appropriate, of the relevant passages | Relevant to claim No. |
|---|---|---|
| X/Y | CN 102087298 A (LANZHOU HAIMO TECHNOLOGIES CO., LTD.) 08 June 2011 (08.06.2011) claims 1-13, description, paragraphs [0058] to [0094], figures 4-7 | 1-3/4-5 |
| Y | JIA, Zhihai et al, INTESTIGATION OF GAS PHASE FLOW RATE OF GAS-WATER TWO-PHASE FLOW BASED ON SLIP MODEL METHOD, JOURNAL OF ENGINEERING THERMOPHYSICS, February 2008, Vol. 29, No. 2, pages 259-262 | 4-5 |
| X/Y | CN 202093040 U (LANZHOU HAIMO TECHNOLOGIES CO., LTD.) 28 December 2011 (28.12.2011) claims 1-11, description, paragraphs [0035] to [0071], figures 4-7 | 1-3/4-5 |
| A | CN 101839738 A (UNIV NORTHWESTERN POLYTECHNIC) 22 September 2010 (22.09.2010) the whole document | 1-8 |
| A | CN 201503284 U (LANZHOU HAIMO TECHNOLOGY CO., LTD.) 09 June 2010 (09.06.2010) the whole document | 1-8 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 21 September 2012 (21.09.2012) | **04 October 2012 (04.10.2012)** |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YANG, Yanlan<br><br>Telephone No. (86-10) **62085705** |
|---|---|

Form PCT/ISA /210 (second sheet) (July 2009)

<table>
<tr><td colspan="2" style="text-align:center">**INTERNATIONAL SEARCH REPORT**</td><td>International application No.<br>**PCT/CN2012/070436**</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | LIU, Chaochen et al, ACCURATE MEASURING OF THE STEAM FLOW, ANHUI SCIENCE & TECHINOLOGY, 2010, No. 8, pages 41-42 | 1-8 |
| A | CN 101017105 A (YU, Hongyan) 15 August 2007 (15.08.2007) the whole document | 1-8 |
| A | CN 1890535 A (MULTI PHASE METERS AS) 03 January 2007 (03.01.2007) the whole document | 1-8 |
| A | CN 101509795 A (TIANJIN RIGID TECHNOLOGY CO., LTD.) 19 August 2009 (19.08.2009) the whole document | 1-8 |
| A | CN 101038188 A (CHANGCHUN BOILER INSTR PROGRAM) 19 September 2007 (19.09.2007) the whole document | 1-8 |
| A | WO 2009/129240 A2 (SCHLUMBERGER CANADA LTD) 22 October 2009 (22.10.2009) the whole document | 1-8 |
| A | GB 2454256 A (SCHLUMBERGER HOLDINGS) 06 May 2009 (06.05.2009) the whole document | 1-8 |

Form PCT/ISA /210 (continuation of second sheet) (July 2009)

## INTERNATIONAL SEARCH REPORT
Information on patent family members

| | International application No. |
|---|---|
| | **PCT/CN2012/070436** |

| Patent Documents referred in the Report | Publication Date | Patent Family | Publication Date |
|---|---|---|---|
| CN 102087298 A | 28.12.2011 | WO 2012100385 A | 02.08.2012 |
| CN 202093040 U | 08.06.2011 | None | |
| CN 101839738 A | 22.09.2010 | None | |
| CN 201503284 U | 09.06.2010 | None | |
| CN 101017105 A | 15.08.2007 | CN 100434870 C | 19.11.2008 |
| CN 1890535 A | 03.01.2007 | NO 323247 B | 12.02.2007 |
| | | NO 20035481 A | 10.06.2005 |
| | | CA 2548063 A | 23.06.2005 |
| | | WO 2005057142 A | 23.06.2005 |
| | | GB 2426593 A | 29.11.2006 |
| | | CN 100439870 C | 03.12.2008 |
| | | BRPI 0417435 A | 06.03.2007 |
| | | US 2007124091 A | 31.05.2007 |
| | | US 7469188 B | 23.12.2008 |
| | | RU 2348905 C | 10.03.2009 |
| | | RU 2006124233 A | 20.01.2008 |
| | | GB 2426593 B | 11.07.2007 |
| CN 101509795 A | 19.08.2009 | CN 101509795 B | 22.02.2012 |
| CN 101038188 A | 19.09.2007 | None | |
| WO 2009/129240 A2 | 22.10.2009 | US 2009260807 A | 22.10.2009 |
| GB 2454256 A | 06.05.2009 | GB 2454256 B | 19.10.2011 |
| | | US 2009114038 A | 07.05.2009 |
| | | US 7562587 B | 21.07.2009 |
| | | WO 2009056841 A | 07.05.2009 |
| | | US 2009234593 A | 17.09.2009 |
| | | US 7987733 B | 02.08.2011 |
| | | EP 2210068 A | 28.07.2010 |
| | | EA 201070556 A | 29.10.2010 |
| | | CN 101903750 A | 01.12.2010 |

Form PCT/ISA /210 (patent family annex) (July 2009)

# INTERNATIONAL SEARCH REPORT

International application No.

**PCT/CN2012/070436**

## A. CLASSIFICATION OF SUBJECT MATTER

G01F 1/88 (2006.01) i

G01P 5/22 (2006.01) i

Form PCT/ISA /210 (extra sheet) (July 2009)